# EUROPEAN PATENT SPECIFICATION

(11) **EP 4 023 329 B1**
(45) Date of publication and mention of the grant of the patent: **09.04.2025**
(21) Application number: 20870628.3
(22) Date of filing: 29.09.2020
(51) Int. Cl.: B01J 20/04, B01J 20/08, B01J 20/06, B01J 20/30, B01J 20/32, B01D 53/02

(54) **ARSENIC REMOVAL ADSORBENT AND ITS PREPARATION METHOD**
ADSORBENS ZUR ARSENENTFERNUNG UND VERFAHREN ZU SEINER HERSTELLUNG
ADSORBANT DE DÉARSENIFICATION ET PROCÉDÉ DE PRÉPARATION ASSOCIÉ

(30) Priority: 30.09.2019 CN 201910938449
(43) Date of publication of application: 06.07.2022
(73) Proprietor: Rezel Catalysts Corporation, Leshan, Sichuan 614000 (CN)
(72) Inventor: ZHUO, Runsheng, Wutongqiao Leshan, Sichuan 614000 (CN); ZHANG, Qing, Wutongqiao Leshan, Sichuan 614000 (CN); ZHANG, Ping, Wutongqiao Leshan, Sichuan 614000 (CN); WANG, Hongfei, Wutongqiao Leshan, Sichuan 614000 (CN); LIU, Xinsheng, Wutongqiao Leshan, Sichuan 614000 (CN)
(74) Representative: Bayramoglu et al.
(86) International application number: PCT/CN2020/118768
(87) International publication number: WO 2021/063345

(56) References cited:
- EP-A1- 1 228 803
- CN-A- 1 258 719
- CN-A- 1 580 196
- CN-A- 104 624 223
- CN-A- 105 562 000
- CN-A- 109 251 764
- CN-A- 110 639 466
- DATABASE WPI Week 201650, Derwent World Patents Index; AN 2016-335615, XP002807743
- DATABASE WPI Week 201004, Derwent World Patents Index; AN 2009-S25940, XP002807744

## Description

### Technical Field

The invention relates to the field of petrochemical industry, in particular to an arsenic removal adsorbent for removing arsenide in low-carbon olefins such as propylene at ambient temperature.

### Background

Low-carbon olefins such as propylene are basic organic raw materials with large demand and wide range of uses in the petrochemical industry, and are widely used in the production of chemical products such as polypropylene; Propylene supply comes mainly from by-products of naphtha cracking to ethylene and heavy oil catalytic cracking processes.

Petroleum contains many elements and compounds that are harmful to the petrochemical processes, and arsenides are one of them. In recent years, with the continuous exploitation of crude oil, the arsenic content in oil products has shown a trend of increasing year by year. Among China's crude oils, Daqing oil and Xinjiang oil both are high arsenic-containing crude oil, especially Daqing oil, which has the highest arsenic content in the world. Arsenides are present in various types of petroleum hydrocarbons, and the products obtained from their subsequent processing of the high arsenic oil products, such as propylene, ethylene, and other materials containing arsenides to various degrees.

Arsenides in these petroleum hydrocarbons, especially liquid petroleum hydrocarbons, have significant negative impact on their subsequent processing. In addition to the easy deposition of arsenic on the surface of pipelines and corrosion to the pipelines which creates hidden dangers, the presence of arsenic may cause some processes not being carried out smoothly.

The most serious problem caused by arsenide is catalyst poisoning, which has a permanent toxic effect on many catalysts in the processing of petroleum hydrocarbons, and some deep processing catalysts often require that the arsenic content must be very low, otherwise the reaction, due to catalyst poisoning, cannot be carried out. Therefore, the arsenide content in petroleum hydrocarbons must be tightly controlled within a certain standard range so as not to affect the activity and service life of the catalyst.

In the olefin industry, hydrocarbon cracking, catalytic reforming, hydrogenation processes, especially in the polymerization process, a very small amount of arsenide in the raw material may poison the catalyst and reduce the catalytic activity, which seriously affects the quality and economic benefits of products. For example, in ethylene unit, minimizing arsenides from the raw material is very important. In order to protect the downstream precious metal hydrogenation catalyst from arsenic poisoning which leads to reduced catalytic activity, some units are equipped with post arsenic removal unit in the processing to remove arsenic from C2, C3 and their mixture.

The propylene polymerization process in industrial production requires that the arsenic content in propylene should not be higher than 20ng/g, otherwise the polymerization reaction cannot proceed normally, and the degree of polymerization will be reduced. Therefore, polymer grade propylene typically requires arsenic content below 10ng/g, or even lower.

The arsenic content in propylene is directly related to the propylene source. At present, some polypropylene manufacturers have the propylene feeds in which arsenic content is as high as 200ng/g or even 10,000ng/g, and these manufacturers have encountered an urgent need to lower arsenic content. Therefore, it is of great importance to remove arsenides from petroleum hydrocarbons such as propylene. The vast majority of arsenides in propylene feeds exists in the form of hydrogen arsenide, so that the problem of arsenic removal is actually the removal of hydrogen arsenide.

In order to remove arsenic from petroleum hydrocarbons, people have carried out reaserch for a quite long time. A variety of arsenic removal methods have been proposed and a variety of arsenic removal agents have been developed. The current commonly used arsenic removal methods for liquid hydrocarbon are mainly the following three methods:
1. Oxidative arsenic removal: Petroleum hydrocarbons are treated with potassium permanganate and cumene hydroperoxide as oxidants, followed by water washing. However, this method is easy to produce a large amount of arsenic containing liquid waste, requiring wastewater treatment which otherwise pollutes the internal parts of the treatment unit and also the environment.
2. Catalytic hydrogenation arsenic removal: Catalytic hydrofining is a commonly used method in catalytic reforming to remove arsenic. In the Chinese patents CN1030440A, CN1113261A, CN1136070A, CN201210556486.8, CN1030440A, CN1030440A, CN98100761.9, CN93105866.X, CN201310342825.7, CN98100762.7, CN201510920454.5 and the US patents such as US2003/0111391A1, all involve catalytic hydrogenation arsenic removal processes. But for people who have skills in the art know that the processes and/or the arsenic removal agents in these patents are only suitable to high temperature conditions and in the presence of hydrogen. Operation at high temperature and high pressure conditions is complex, its cost is high, and coke is easily formed which results in shorter service life.
3. Adsorption arsenic removal: For example, silica-alumina spheres and silica-alumina spheres loaded with copper sulfate are used to remove trace arsenide from liquid petroleum hydrocarbons. For most applications, the process of arsenic removal by adsorption is simple, but it is difficult to remove high boiling arsenide, also the efficiency of arsenic removal is low, the adsorbent arsenic adsorption capacity is low, and the service life is short. However, among the three main pre-arsenic removal methods used in industry, the arsenic removal process by adsorption has attracted much attention because of its simplicity, easy treatment and high efficiency, as disclosed and described in the patents US4593148, US5064626, US5085844, US5096681, US5096682 and etc.

Arsenific removal adsorbents most commonly used in the prior art are lead-based and copper-based adsorbents. For example US53782076 disclosed a lead-based arsenic removal adsorbent using alumina as carrier supported with lead oxide, that is suitable for removal of arsenic from feed containing gaseous hydrocarbons. But when the feed contains sulfides and other impurities such as hydrogen sulfide, the efficiency of arsenic removal is greatly reduced.

In the prior art, US4849577 and CN200810113631.9 disclose lead-based arscenic removal adsorbents capable of simultaneously removing arsenic and carboxysulfur compounds from liquid hydrocarbons, wherein the carrier is alumina and the active component is lead oxide. But these arscenic removal adsorbents are still not suitable for arsenic removal from gaseous hydrocarbons with higher sulfur content. Lead-based arsenic removal adsorbent generally have drawbacks of low arscenic adsorption capacity.

Prior art CN200810114094.X, CN200810113359.4, CN200810114092.0 and US5990372 disclose alumina and clay as carriers, with iron oxides as the active center, but these adsorbents still use lead oxide as additive. Even though they have higher sulfur capacity, but the adsorption capacity of arsenic is still low.

The commonly used copper-based arsenic removal agent is impregnated with 5% to 10% copper sulfate solution on silica-alumina or activated carbon spheres. The copper sulfate impregnated silica-alumina spheres has low adsorption capacity for arsenic, only 0.1% to 0.3%, also the operating cycle is short, the consumption is large, the accumulated waste catalysts are difficult to handle which is easy to lead to environmental pollution.

Like the invention, there are many existing technical patents of copper based arsenic removal adsorbents using copper oxide as the main active component. For example, Chinese patent CN1197052A discloses a method for removing arsenic from liquid hydrocarbon feedstock. The arsenic removal adsorbent used in the method is copper oxide or copper sulfide deposited on the carrier, and the method operates at low temperature and pressure conditions without hydrogen. Its preparation involves a complex vulcanization process, so the arsenic removal active component exists at least in part as copper sulfide.

Chinese Patents CN1093526C and CN200810113132.X disclosed deposition of copper-zinc on alumina carrier to remove arsenic from gaseous feedstocks. Chinese Patent CN1197052A discloses an ascenic removal adsorbent where at least one copper oxide or copper sulfide is deposited on alumina balls or silica supports, removes arsenic from the liquid hydrocarbon feedstock within a wide temperature range and at low pressure, without the presence of hydrogen.

Chinese Patent CN1278523A also disclosed an adsorbent and its preparation method for removing trace amounts of arsenides from hydrocarbons at room temperature. The adsorbent is composed of CuO, ZnO, Al₂O₃, and also contains precious metals, but the precious metals addition would increase its cost. In addition, CN1580196A disclosed the adsorbent of which the high boiling point arsenides removal efficiency is improved from liquid petroleum hydrocarbons at low or ambient temperatures.

Chinese patent CN103316690A reported an arsenic removal adsorbent of which CuO as active component, transition metals oxides, La₂O₃, CeO₂, precious metals palladium and silver oxides as additives, and activated carbon as carrier via one time pretreatment and three times impregnation. Activated carbon as a carrier can provide large pore volume as reported in the Chinese patent CN200510110226.8 where activated carbon and iron oxide form composite for arsenic removal in water or atmospheric flue gas with high capacity, high selectivity, and high adsorption rate.

Other porous materials for making arsenic removal adsorbent by modification have also been reported. Chinese patent CN102553517B disclosed a arsenic removal adsorbent of which the carrier is made of waste silicon-alumina catalyst by burning off its coke first, followed by grinding and sieving to form powder, then dry mixing the powder with alumina powder and extrusion aid, nitric acid and deionized water, followed by kneading, extruding, drying, and calcining. The active components copper and zinc oxide were deposited on the carrier, and then drying and calcining. The arsenic removal asdsorbent so obtained was used for removing the arsenic in light oil. Chinese patent CN1043151C discloses a preparation method of arsenic removal adsorbent with double pore sizes, also for the liquid hydrocarbons fraction containing arsenic. The arsenic removal adsorbent has a wide range of pore size distribution and small specific surface area, and is used for arsenic removal of arsenic-containing liquid hydrocarbons at 80 to 250°C after being reduced, passivated, activated. However, the catalyst is not suitable for arsenic removal at room temperature.

Chinese Patent CN1667091A disclosed a room temperature arsenic removal adsorbent formed by one or two of the mesoporous molecular sieves, double-porous molecular sieves, silica, alumina, magnesium oxide, zinc oxide, and alumina-silica composite as carrier and copper, iron, manganese, silver, palladium compounds and alloys of two metal atoms among them as active component.

Chinese patent CN200610117961.6, CN200510111322.4, CN200510029344.6 also disclosed an arsenic removal adsorbent using dual mesoporous-microporous structure of the molecular sieve as carrier, and active metals such as copper, iron, manganese, nickel, and silver as active component. This arsenic removal adsorbent not only removes arsenic but also exhibits better water resistance property.

Chinese patent CN103566947A disclosed a copper-based room temperature arsenic removal adsorbent and its preparation method. The adsorbent is made of manganese dioxide, copper oxide, and zinc oxide as active component, by adding one or combination of the binder, pore making agent, and extrusion aid agent as additive. The introduction of pore making agent is good for large pores but its improvement on pore volume is very limited.

The arsenides in petroleum hydrocarbons are present mainly in the form of trivalent organic complexes, and the organic arsenic complexes with different boiling points enter into various distillates after crude oil distillation. In addition to containing a certain amount of low-boiling point arsenides such as AsH3, liquid petroleum hydrocarbons also contain a considerable number of high-boiling point arsenides, such as As(CH₃)₃, AS(C₂H₅)₃ and so on. The higher the boiling point or longer the hydrocarbon chain of the arsenide is, the less likely it is to be removed. A better arsenic removal adsorbent is therefore needed. From the data provided in the patent literature, the arsenic removal efficiency using copper compounds as active component for high boiling point arsenides is not high, and its arsenic capacity is less than 0.1%.

CN1580196 discloses a sorbent composition to remove arsenic comprising various carriers such as ZSM-5 molecular sieve, mesoporous molecular sieve, USY molecular sieve, mixture of one or two choices of activated carbon, alumina, silicon dioxide, zinc oxide, copper oxides, chromium hemitrioxide, titanium dioxide, Si-Al oxide on which one to three types of transition metals or its oxides are supported and one or two types of rare earth metal and/or precious metal or their oxides. The rare earth metal is selected from lanthanum, cerium, samarium. The mean pore size of said sorbent is 1-100 nm, the pore volume is 0.1-1.5ml/g. It does not disclose that the composite carrier formed as a core is from macroporous γ-Al₂O₃ and nano-ZnO coated with an outer layer of CaO and Al₂O₃ and being further coated with an rare earth oxide and CuO as core-shell structure.

CN105582877A discloses aa desulfurization and arsenic removal composition for purifying natural gas, synthetic gas and light gas-liquid hydrocarbons comprising 1-10 % wt. green copper-zinc ore, 10-50 % wt. copper oxide, 10-60 % wt. zinc oxide, and 0.01-3 % wt. rare earth metal. It does not disclose that the composition has a core shell structure with a compact core of alumina and ZnO on which a layer of CaO and Al₂O₃ is deposited and further the copper and the rare earth metal oxides are forming a layer.

CN101591556B discloses a dearsenification composition comprising 5-30 wt.% copper oxide, 15-30 wt.% zinc oxide, 20-28 wt.% one or more of metallic oxides in group VIII, 5-10 wt.% alumina, and inactive materials.

Due to the complex factors affecting the adsorption arsenic removal process of liquid petroleum hydrocarbon, the requirements for arsenic removal agent are also high. In the existing technology, there are generally low arsenic capacity and poor arsenic removal efficiency; It is easy to be disturbed during use and has a short service cycle; The adsorbent has small porosity and poor water resistance; The amount of active metals used is large and the effective utilization rate is low; There are also problems such as large bulk density, high cost of one-time loading, and high capital cost.

### Summary

As can be seen from the above prior art, arsenic removal adsorbent is mainly composed of carriers and active components, The carriers are mostly compounds of molecular sieves, alumina, silica, etc.; The active ingredients are mostly compounds of transition metal elements such as copper, iron, manganese, silver, palladium, and nickel.

The preparation of arsenic removal adsorbent mainly adopts conventional impregnation method, co-precipitation method, decomposition method, and mechanical mixing method, and the uniform and effective dispersion of the active ingredient on the carrier also needs to achieve a certain optimal state. Since the arsenic removal of light hydrocarbons such as propylene and ethylene have very important applications in petrochemical production. Therefore, it is very meaningful to develop a arsenic removal adsorbent with high activity, large adsorption capacity, high accuracy and selectivity, good mechanical strength and water resistance during industrial use.

The purpose of this invention aims to solve the above technical issues and provide an arsenic removal adsorbent and its preparation method. The arsenic removal adsorbent used in industrial processes is characterized by its high arsenic capacity, good adsorption selectivity, excellent arsenic removal performance, good water resistance and mechanical strength and by its high porosity with easy diffusion and core-shell structure. The arsenic removal adsorbent is used for arsenic removal of liquid petroleum hydrocarbons at ambient temperature.

The purpose of the invention is realized through the following technical route and implementation scheme. Due to the rapid development of preparation technology of high porosity porous adsorption materials with adjustable pore size distribution, stable structure, large pore surface and modifiable characteristics, it will bring certain advantages in adsorption processes when used as an adsorbent or catalyst carrier, and maximize adsorption reaction efficiency with active component.

These porous material preparation technologies are used to prepare low-carbon olefin arsenic removal adsorbent. On the one hand, it provides large pore surface area and the active components can be better dispersed, and on the other hand, it provides easy diffusion channel, conducive to improving transportation of the arsenic-containing petroleum hydrocarbons. Then, in a suitable manner, the components with good water resistance property are implanted onto the external structure of the core shell structure to form a protective layer, so that a purification adsorbent suitable for high arsenic removal performance at room temperature and low temperature can be achieved.

Those who skilled in the art are well aware that porosity and structure are important factors affecting adsorption, adsorption capacity, selectivity and purification accuracy. A very complex nonlinear relationship exists between adsorbent mechanical strength and their adsorption performance, which can be found in the reference book and also literature such as "Heterogeneous Catalysis in Practice" Charles N. Satterfield, p334-344 (1980, McGraw-Hill).

As far as the current level of catalysis theory and technology is concerned, it is not possible to achieve accurate theoretical derivation or empirical prediction to establish a clear correlation, through simple conditional tests and possible combination tests, between pore system and adsorption performance, reaction performance and mechanical strength. The "knowhow" preparation technology for pore modification and compositional adjustment still rely on the accumulation of experience. These knowledge and experience for the present invention likewise constitute the proprietary techniques of how to make the adsorbents.

The present invention provides an arsenic removal adsorbent wherein the composition is composed of: 10 to 40 wt% of CuO, 5 to 30 wt% of ZnO, 1 to 20 wt% of CaO, 0.1 to 10 wt% of Cl⁻, and 0.1 to 10 wt% of a rare earth oxide, and the remainder being Al₂O₃. The composite carrier is jointly formed with a high-pore volume core by combining macroporous γ-Al₂O₃ and nano-ZnO, and the CuO and the rare earth oxide being impregnated on the composite carrier and an outer layer by coating mixed CaCl₂ and Al₂(OH)ₙCl₆₋ₙ, wherein n is 1 to 5, the rare earth is lanthanum or cerium. The composite carrier is soaked with an acidification solution containing copper compound and rare earths and then dried, calcined and activated. The CuO and the rare earth oxide are impregnated on the composite carrier. The obtained arsenic removal adsorbent has a pore volume of 0.1 to 0.9 mL/g. The preferred pore volume is 0.3- 0.7 mL/g.

The present invention provides a preparation method of the arsenic removal adsorbent, which is characterized in the following steps:
(1) The precursor macroporous γ-Al₂O₃ and nano-ZnO are mixed uniformly by selecting one of the methods such as dry method, wet method and liquid phase mixing method, wherein the precursor macroporous γ-Al2O3 is aluminum hydroxide xerogel powder prepared by precipitation of aluminum sulfate and the precursor of the nano-ZnO is basic zinc carbonate. The mixed material is processed into small spherical balls by selecting one of shaping methods such as ball rolling, oil column drop-sphere-forming or extrusion-cutting-shaping method;
(2) Drying the formed small balls at 100 to 250°C for 0.5 to 15 hours to form a composite carrier core;
(3) Coating CaCl₂ and Al₂(OH)ₙCl₆₋ₙ (n=1-5) thin layer on the outer layer of the small spherical balls in a ball rolling machine;
(4) The core-shell composite balls are impregnated with an acidified solution of copper compound and rare earths by either step-by-step impregnation method or mixed impregnation method, then dried at 100 to 250°C for 0.5 to 15 hours. The impregnation and drying can be alternately repeated 1 to 5 times. Preferably, impregnation and drying steps alternately proceed 1 to 2 times;
(5) The dried above material is activated by roasting at 300 to 650°C for 0.5 to 15 hours, More preferably, the roasting activation condition is 1 to 5 hours at 350 to 500°C.

These preparation procedures and steps involve mixing, forming, coating, dipping, drying and baking methods, which are well known to those who skilled in the art and employ them in their daily experimental applications. The amount of deionized water added to facilitate the preparation may not be constricted because most of it is removed during drying and baking. The CaCl₂ and Al₂(OH)ₙCl₆₋ₙ involved are commercially available, of which Al₂(OH)ₙCl₆₋ₙ is also industrially known as aluminum sol, and its composition has a lot to do with adhesion properties and has greater impact on mechanical strength of the formed adsorbent. The present invention preferably uses Al₂(OH)ₙCl₆₋ₙ with n = 4.0 to 4.8.

In the present invention, the formation of high porosity γ-Al₂O₃ after calcination allows hydrocarbon molecules to easily diffuse. The aluminum hydroxide dry gel powder prepared via the aluminum sulfate precipitation method is a commercially available product and can be easily obtained.

The present invention provides an arsenic removal adsorbent wherein the nano-ZnO precursor is an alkaline zinc carbonate. In the current preparation process, nano-ZnO is formed via decomposition of the precursor so that the composite carrier forms high porosity and channels allowing hydrocarbon molecules easy to diffuse. The basic zinc carbonate can be easily obtained through commercial purchase.

The present invention provides an arsenic removal adsorbent wherein the copper compound is one or combination of copper tartarate, copper oxide, copper hydroxide, copper carbonate, copper sulfate, copper nitrate, copper acetate and copper chloride, preferably copper nitrate. These copper compounds are readily commercially available.

The present invention provides an arsenic removal adsorbent wherein the rare earth is lanthanum compound or cerium compound.

In the present invention, these rare earth compounds are used as active component which can be easily obtained by commercial purchase.

The present invention provides an arsenic removal adsorbent wherein the acidified solution is the solution obtained by acidification with nitric acid; The degree of acidification directly affects the mechanical strength of the adsorbent structure. The nitric acid can be easily obtained through commercial purchase.

The present invention provides an arsenic removal adsorbent for industrial arsenic removal of propylene gas stream purification which can be performed at ambient temperature and low temperature (<100°C), atmospheric pressure, gas volume space velocity of 1200 to 2100 hours ⁻¹, or equivalent to a mass space velocity of 4.5 to 8.0 hours ⁻¹.

Compared with the existing arsenic removal adsorbent and preparation techniques, the arsenic removal adsorbent provided by the present invention has higher pore volume and larger carrier inner surface area of the pore channel, so that the active component can be better dispersed, thereby improving the effective contact of arsenic removal active component and arsenide.

In addition, the large pore diffusion channels of the composite carrier are conducive to diffusion transfer of arsenic-containing petroleum hydrocarbon, offer good adaptability to complex components in petroleum hydrocarbons and arsenic removal efficiency at ambient and low temperatures which can quickly remove arsenic compounds from liquid petroleum hydrocarbons, and can adapt to changing working conditions.

In the industrial process, it is usually difficult to avoid the presence of impurities in the raw materials and when the raw material hydrocarbon contains impurities such as sulfides and water, it causes great interference to the adsorption purification process. Since the adsorbent of the present invention has higher competitive adsorption selectivity, the performance can still be maintained under such raw material condition, achieving good arsenic removal efficiency. The mechanical strength of the arsenic removal adsorbent of the present invention which is superior to the prior art adsorbent provides stable operating period as a result.

The arsenic removal adsorbent of the present invention due to its superior properties at ambient temperature or low temperature and at non-hydrogen-based conditions will not produce arsenic-containing waste liquid and pollute our environment. The operation process is therefore simpler, safer, and lower cost.

### Detailed Description of the Embodiments

In each embodiment, the pore volume of the sample was determined by BET low-temperature nitrogen adsorption method. The mechanical strength was measured following the usual catalyst wear and compressive strength determination method. Other measurements refer to the relevant analytical methods as reported in National Standards for Testing Methods for Petroleum and Petroleum Products, published by China Standards Press, 1989 and Petrochemical Analytical Methods (RIPP Test Methods), Science Press, 1990.

### Example 1

7800 g of aluminum hydroxide dry powder (industrial product, Shandong Xingdu Petrochemical Technology Co., Ltd., aluminum hydroxide ≮68 wt%) and 3500g of alkaline zinc carbonate powder (industrial product, Hangzhou Tornado Chemical Co., Ltd., zinc ≮57 wt%) were wet mixed evenly and kneaded with a kneading machine. The mixture was transferred to a small turntable balling machine to make Φ5mm spherical balls. After that, the balls were coated with a suspension made of 2500 g aluminum sol (industrial product, Sichuan Runhe Catalytic New Materials Co., Ltd., Alumina ≮20 wt%), 1100g calcium chloride powder (industrial product, Weifang Chuanghui Chemical Co., Ltd., calcium chloride ≮74 wt%) and deionized water. The so-formed coating balls were dried in an oven at 120°C for 4 hours and then impregnated with an aqueous solution composed of 6000g copper nitrate (industrial product, Jinan Yuanmao Chemical Co., Ltd., 98 wt%), 250 g lanthanum chloride (industrial products, Leshan Shenghe Rare Earth Co., Ltd., TREO ≮ 45 wt%), 150g nitric acid (industrial products, Nanjing Runqiao Fine Chemical Co., Ltd., ≮68 wt%) and deionized water. After that, the arsenic removal adsorbent of Example 1 is obtained by drying at 120°C for 2 hours and calcining at 350°C for 6 hours.

### Comparative example 1

The γ-Al₂O₃ (industrial product, Shandong Zibo Jiarun Chemical Co., Ltd. Al₂O₃ ≮99.9 wt%) was impregnated with an aqueous solution of copper nitrate with the same CuO content as in Example 1. The arsenic removal adsorbent of comparative example 1 is then obtained by drying at 120°C for 2 hours and calcining at 350°C for 6 hours.

### Comparative example 2

Copper nitrate (industrial product, Jinan Yuanmao Chemical Co., Ltd., 98 wt%), zinc nitrate (industrial product, Shijiazhuang Xuanran Chemical Products Sales Co., Ltd., Zn(NO₃) ₂·6H₂O ≮98 wt%) and aluminum nitrate (industrial product, Shanghai Jiupeng Chemical Co., Ltd., Al(NO₃)₃·9H₂O ≮ 98.5 wt%) were precipitated together, and the content of CuO and ZnO are same as in Example 1. The arsenic removal adsorbent of comparative example 2 is then obtained by drying at 120°C for 2 hours and calcining at 350°C for 6 hours.

### Example 2

7600 g of aluminum hydroxide dry powder (industrial product, Shandong Xingdu Petrochemical Technology Co., Ltd., aluminum hydroxide ≮68 wt%) and 2800 g of alkaline zinc carbonate powder (industrial product, Hangzhou Tornado Chemical Co., Ltd., zinc ≮57 wt%) were wet mixed evenly and kneaded with a kneading machine. The mixture was extruded, diced and shaped to make Φ5mm spherical balls. After that, the balls were coated with a suspension made of 3000 g aluminum sol (industrial products, Sichuan Runhe Catalytic New Materials Co., Ltd., Alumina ≮20 wt%), 1400 g calcium chloride powder (industrial product, Weifang Chuanghui Chemical Co., Ltd., calcium chloride ≮74 wt%) and deionized water. The so-formed coated balls were dried in an oven at 110°C for 6 hours and then impregnated with an aqueous solution composed of 6500 g copper nitrate (industrial product, Jinan Yuanmao Chemical Co., Ltd., 98 wt%), 1000g cerium nitrate, 200 g nitric acid (industrial product, Nanjing Runqiao Fine Chemical Co., Ltd., ≮68 wt%) and deionized water. After that, the arsenic removal adsorbent of Example 2 is obtained by drying at 110°C for 4 hours and calcining at 380°C for 4 hours.

### Example 3

6600 g of aluminum hydroxide dry powder (industrial product, Shandong Xingdu Petrochemical Technology Co., Ltd., aluminum hydroxide ≮68 wt%) and 4000 g of alkaline zinc carbonate powder (industrial product, Hangzhou Tornado Chemical Co., Ltd., zinc ≮57 wt%) were wet mixed evenly and kneaded with a kneading machine. The mixture was extruded, diced and shaped to make Φ4mm spherical balls. After that, the balls were coated with a suspension made of 3000 g aluminum sol (industrial product, Sichuan Runhe Catalytic New Materials Co., Ltd., Alumina ≮20 wt%), 1700 g calcium chloride powder (industrial product, Weifang Chuanghui Chemical Co., Ltd., calcium chloride ≮74 wt%) and deionized water. The so-formed coated balls were dried in an oven at 120°C for 3 hours and then impregnated step by step with an aqueous solution composed of 5000 g copper nitrate (industrial product, Jinan Yuanmao Chemical Co., Ltd., 98 wt%), 400g Ce-rich rare earth chloride, 200g nitric acid (industrial product, Nanjing Runqiao Fine Chemical Co., Ltd., ≮68 wt%) and deionized water. After that, the arsenic removal adsorbent of Example 3 is obtained by drying at 120°C for 2 hours and calcining at 330°C for 10 hours.

### Example 4

Performance of the arsenic removal adsorbent in Examples 1 to 3 and comparative examples 1 to 2 are tested on a micro-evaluation device. The test is carried out at ambient temperature and atmospheric pressure. The volume space velocity is 1600 to 1800 hours⁻¹. The device has 20 mL volume. The feedstock is industrial propylene with a purity higher than 99.5%, its arsenic content 1600-1800 ng/g, sulfur content less than 18 mg/m³, and water content less than 50 µg/g. The adsorption reaction was stopped when the arsenic content at the outlet of the device was higher than 10 ng/g. The test results are listed in Table 1 below.

**Table 1. Comparison of arsenic removal adsorbents**

| | **Example 1** | **Example 2** | **Example 3** | **Comparati ve example 1** | **Comparativ e example 2** |
|---|---|---|---|---|---|
| **Average arsenic removal rate in 1 cycle (%)** | 99.82 | 99.93 | 99.74 | 98.13 | 98.97 |
| **Average arsenic content in outlet after 1 cycle (ng/g)** | 1.73 | 1.69 | 2.05 | 5.02 | 4.57 |
| **Arsenic capacity (wt%)** | 9.27 | 9.87 | 9.62 | 3.97 | 6.81 |
| **Mechanical strength after use (N)** | 87 | 91 | 86 | 79 | 43 |

As can be seen from the data in Table 1, the sample of the present invention in Example 1 has better arsenic removal efficiency and adsorption arsenic capacity. Also the arsenic removal adsorbent exhibits better competitive adsorption selectivity and better strength when used in the working condition with higher impurity content.

Finally, it should be noted that the above-mentioned specific implementation examples further describe the purpose, technical scheme and beneficial effects of the invention. It should be understood that the above-mentioned is only the specific implementation examples of the invention, and is not used to limit the protection scope of the invention.

## Claims

1. A preparation method of an arsenic removal adsorbent for purification process of propylene gas streams with the composition containing the following components in terms of weight percent: 10 to 40 wt% of CuO, 5 to 30 wt% of ZnO, 1 to 20 wt% of CaO, 0.1 to 10 wt% of Cl⁻ , and 0.1 to 10 wt% of rare earth oxide, wherein the rare earth is lanthanum or cerium and remainder being Al₂O₃, comprising the following steps:
1) the precursor microporous γ-Al₂O₃ and nano-ZnO are mixed uniformly by one of the methods selected from dry method, wet method and liquid phase mixing method, wherein the precursor microporous γ -Al₂O₃ is aluminum hydroxide xerogel powder prepared by precipitation of aluminum sulfate and the precursor of the nano-ZnO is basic zinc carbonate and the mixture is shaped into small spherical balls by one of the methods such as rolling, oil column forming or extrusion-cutting-shaping;
2) drying the formed balls at 100 to 250°C for 0.5 to 15 hours to form composite carrier cores;
3) coating the composite carrier cores with a composition of CaCl₂ and Al2(OH)ₙ Cl₆₋ₙ (n=1-5) to form outer layer via ball rolling;
4) impregnating the produced core-shell balls with an acidified aqueous solution of copper and rare earth compounds, the rare earth being lanthanum or cerium, by either step-by-step impregnation or mixed impregnation method, followed by drying at 100 to 250°C for 0.5 to 15 hours, wherein the impregnation and drying steps can be alternately repeated 1 to 5 times;
5) activating the impregnated material by calcining at 300 to 650°C for 0.5 to 15 hours.

2. The preparation method of arsenic removal adsorbent of claim 1, wherein the calcination and activation are carried out at 350 to 500°C for 1 to 5 hours.

3. The preparation method of arsenic removal adsorbent of claim 1, wherein the copper compound is one or combination of copper tartrate, copper oxide, copper hydroxide, copper carbonate, copper sulfate, copper nitrate, copper acetate, and copper chloride.

4. The preparation method of the arsenic removal adsorbent according to claim 1, wherein n in said Al₂(OH)ₙCl₆₋ₙ is 4.0 to 4.8.

5. An arsenic removal adsorbent for purification process of propylene gas streams obtained by the method of any of claims 1 to 4.

6. Use of the arsenic removal adsorbent according to claim 5 in a purification process of propylene gas streams.

## Patentansprüche

1. Herstellungsverfahren eines Arsenentfernungsadsorptionsmittels für den Reinigungsprozess von Propylengasströmen mit der Zusammensetzung, die die folgenden Komponenten in Gewichtsprozent enthält: 10 bis 40 Gew.-% CuO, 5 bis 30 Gew.-% ZnO, 1 bis 20 Gew.-% CaO, 0,1 bis 10 Gew.-% Cl und 0,1 bis 10 Gew.-% Seltenerdoxid, wobei die seltene Erde Lanthan oder Cer und der Rest Al₂O₃ ist, das die folgenden Schritte umfasst:
1) der mikroporöse Vorläufer γ-Al₂O₃ und nano-ZnO werden gleichmäßig durch eines der aus dem Trockenverfahren ausgewählten Verfahren, Nassverfahren und Flüssigphasen-Mischverfahren, gemischt, wobei das mikroporöse γ-Al₂O₃ in der Vorstufe ein Aluminiumhydroxid-Xerogelpulver ist, das durch Fällung von Aluminiumsulfat hergestellt wurde, und der Vorläufer des Nano-ZnO basisches Zinkcarbonat ist und die Mischung durch eines der Verfahren wie Walzen, Ölsäulenbilden oder Extrusions-Schneiden-Formen zu kleinen Kugeln geformt wird;
2) Trocknen der gebildeten Kugeln bei 100 bis 250°C für 0,5 bis 15 Stunden, um Verbundträgerkerne zu bilden;
3) Beschichten der Verbundträgerkerne mit einer Zusammensetzung aus CaCl₂ und Al2(OH)ₙ Cl₆₋ₙ (n=1-5), um die äußere Schicht durch Kugelwalzen zu bilden;
4) Imprägnieren der hergestellten Kern-Hülle-Kugeln mit einer angesäuerten wässrigen Lösung aus Kupfer und Seltenerdverbindungen, wobei die seltenen Erden Lanthan oder Cer sind, entweder durch schrittweise Imprägnierung oder gemischtes Imprägnierungsverfahren, mit anschließendem Trocknen bei 100 bis 250°C für 0,5 bis 15 Stunden, wobei die Imprägnierungs- und Trocknungsschritte abwechselnd 1 bis 5 Mal wiederholt werden können;
5) Aktivieren des imprägnierten Materials durch Kalzinieren bei 300 bis 650°C für 0,5 bis 15 Stunden.

2. Herstellungsverfahren des Arsenentfernungsadsorptionsmittels nach Anspruch 1, wobei die Kalzinierung und Aktivierung bei 350 bis 500°C für 1 bis 5 Stunden durchgeführt werden.

3. Herstellungsverfahren des Arsenentfernungsadsorptionsmittels nach Anspruch 1, wobei die Kupferverbindung eines oder eine Kombination aus Kupfertartrat, Kupferoxid, Kupferhydroxid, Kupfercarbonat, Kupfersulfat, Kupfernitrat, Kupferacetat und Kupferchlorid ist.

4. Herstellungsverfahren des Arsenentfernungsadsorptionsmittels nach Anspruch 1, wobei n in dem Al₂(OH)ₙCl₆₋ₙ 4,0 bis 4,8 beträgt.

5. Arsenentfernungsadsorptionsmittel für den Reinigungsprozess von Propylengasströmen, das durch das Verfahren eines der Ansprüche 1 bis 4 erhalten wird.

6. Verwendung des Arsenentfernungsadsorptionsmittels nach Anspruch 5 in einem Reinigungsprozess von Propylengasströmen.

## Revendications

1. Procédé de préparation d'un adsorbant d'élimination d'arsenic destiné à un processus de purification de flux de gaz de propylène avec la composition contenant les composants suivants en termes de pourcentage en poids : 10 à 40% en poids de CuO, 5 à 30% en poids de ZnO, 1 à 20% en poids de CaO, 0,1 à 10% en poids de Cl et 0,1 à 10% en poids d'oxyde de terre rare, dans lequel la terre rare est du lanthane ou du cérium et le reste étant constitué par Al₂O₃, comprenant les étapes suivantes :
1) le précurseur microporeux γ-Al₂O₃ et le nano-ZnO sont mélangés de manière uniforme par l'un des procédés choisis parmi le procédé sec, le procédé humide et le procédé de mélange en phase liquide, dans lequel le précurseur microporeux γ-Al₂O₃ est une poudre d'hydroxyde d'aluminium xérogel préparée par précipitation de sulfate d'aluminium et le précurseur du nano-ZnO est du carbonate de zinc basique et le mélange est mis en forme en petites billes sphériques par l'un parmi les procédés tels que le laminage, la formation en colonne d'huile ou l'extrusion-découpage-mise en forme ;
2) séchage des billes formées à 100 à 250°C pendant 0,5 à 15 heures pour former des noyaux de support composites ;
3) revêtement des noyaux de support composites avec une composition de CaCl₂, Al2(OH)ₙ Cl₆₋ₙ (n=1-5) pour former une couche externe par laminage à billes ;
4) imprégnation des billes à noyau-coque produites d'une solution aqueuse acidifiée de cuivre et de terres rares, les terres rares étant du lanthane ou du cérium, soit par imprégnation pas à pas ou par un procédé d'imprégnation mixte, suivie d'un séchage à 100 à 250°C pendant 0,5 à 15 heures, dans lequel les étapes d'imprégnation et de séchage peuvent être répétées en alternance 1 à 5 fois ;
5) activation du matériau imprégné par calcination à 300 à 650°C pendant 0,5 à 15 heures.

2. Procédé de préparation d'un adsorbant d'élimination d'arsenic selon la revendication 1, dans lequel la calcination et l'activation sont réalisées à 350 à 500°C pendant 1 à 5 heures.

3. Procédé de préparation d'un adsorbant d'élimination d'arsenic selon la revendication 1, dans lequel le composé de cuivre est l'un parmi le tartrate de cuivre, l'oxyde de cuivre, l'hydroxyde de cuivre, le carbonate de cuivre, le sulfate de cuivre, le nitrate de cuivre, l'acétate de cuivre et le chlorure de cuivre ou une combinaison de ceux-ci.

4. Procédé de préparation d'un adsorbant d'élimination d'arsenic selon la revendication 1, dans lequel n dans ledit Al₂(OH)ₙCl₆₋ₙ est de 4,0 à 4,8.

5. Adsorbant d'élimination d'arsenic destiné à un processus de purification de flux de gaz de propylène obtenu par le procédé selon l'une des revendications 1 à 4.

6. Utilisation de l'adsorbant d'élimination d'arsenic selon la revendication 5 dans un processus de purification de flux de gaz de propylène.
